# EUROPEAN PATENT SPECIFICATION

(11) **EP 3 951 206 B1**
(45) Date of publication and mention of the grant of the patent: **08.05.2024**
(21) Application number: 20779451.2
(22) Date of filing: 13.03.2020
(51) Int. Cl.: F16D 51/22, F16D 65/09, F16D 65/22, F16D 121/24, F16D 125/60, B60T 13/74

(54) **ELECTRIC PARKING BRAKE DEVICE**
ELEKTRISCHE FESTSTELLBREMSENVORRICHTUNG
DISPOSITIF DE FREIN DE STATIONNEMENT ÉLECTRIQUE

(30) Priority: 26.03.2019 JP 2019058096
(43) Date of publication of application: 09.02.2022
(73) Proprietor: Hitachi Astemo, Ltd., Hitachinaka-shi Ibaraki 312-8503 (JP)
(72) Inventor: USUI, Koji, Hitachinaka-shi, Ibaraki 312-8503 (JP); NAKAJIMA, Naotoshi, Hitachinaka-shi, Ibaraki 312-8503 (JP)
(74) Representative: Dehns
(86) International application number: PCT/JP2020/011133
(87) International publication number: WO 2020/195961

(56) References cited:
- WO-A1-2015/199237
- WO-A1-2017/169815
- JP-A- 2010 241 271
- JP-A- 2015 110 967
- JP-A- 2016 176 574

## Description

### Technical Field

The present invention relates to an electric parking brake device in which a parking brake mechanism capable of generating a parking brake force is provided in the back plate of a drum brake mounted to a wheel and an electric actuator that exerts power for driving the parking brake mechanism is fixedly disposed outside the back plate.

### Background Art

There is known an electric parking brake device that obtains a parking brake force from the power exerted by an electric actuator in patent literature 1.

WO 2017169815 A1 and JP 2016176574 A each disclose electric parking brakes according to the precharacterising portion of claim 1.

### Citation List

### Patent Literature

PTL 1: JP-A-2015-172385

### Summary of Invention

### Technical Problem

In the invention disclosed in patent literature 1 above, the flexibility in the layout of the electric actuator is increased by mounting the actuator case of the electric actuator on the back plate behind the axle shaft in the vehicle front-rear direction to prevent interference with various components. However, in a vehicle assumed to travel on a rough road, such as an off-road vehicle, when the electric actuator is present below the axle shaft of the wheel, the electric actuator may be attacked by external factors such as flying stones during travel of the vehicle.

The present invention addresses such situations with an object of proving an electric parking brake device capable of avoiding attacks on the electric actuator caused by external factors during travel of the vehicle.

### Solution to Problem

To achieve the above object, according to a first aspect of the present invention, there is provided an electric parking brake device in which a parking brake mechanism capable of generating a parking brake force is provided in a back plate of a drum brake mounted to a wheel and an electric actuator that exerts power for driving the parking brake mechanism is fixedly disposed outside the back plate, in which an actuator case of the electric actuator supports an electric motor and a screw shaft; wherein the parking brake mechanism includes a parking brake operator that pivots by receiving the power from the electric actuator, at least a portion of link means disposed between the electric actuator and the parking brake operator to transmit the power from the electric actuator, the portion being disposed in the back plate, extends in a tangent direction of a pivot direction of the parking brake operator and connected to the parking brake operator and at least a portion of the link means disposed outside the back plate is bent and connected to the electric actuator; characterized in that the actuator case of the electric actuator is disposed above a rotating center of the wheel with the drum brake mounted to the wheel.

According to a second aspect of the present invention, in addition to the structure according to the first aspect, the link means is routed at a position below the rotating center of the wheel in the back plate with the drum brake mounted to the wheel.

According to a third aspect of the present invention, in addition to the structure according to any one of the first or second aspects, the actuator case is disposed at a position inside an outermost circumference of the back plate in side view as seen in a direction parallel to the rotating center of the wheel.

According to a fourth aspect of the present invention, in addition to the structure according to any one of the first to third aspects, a posture of the electric actuator is set so that an operating axis line of an output member of the electric actuator is aligned with a vehicle front-rear direction.

According to a fifth aspect of the present invention, in addition to the structure according to any one of the first to fourth aspects, the actuator case is mounted on the back plate.

According to a sixth aspect of the present invention, in addition to the structure according to any one of the first to fifth aspects, the link means disposed between the electric actuator (38) and the parking brake operator (34) is a brake cable (37) and at least a portion of the brake cable is covered with a cylindrical member, the portion being routed outside the back plate.

### Advantageous Effects of Invention

According to the first aspect of the present invention, the actuator case of the electric actuator is disposed above the rotating center of the wheel, so attacks on the electric actuator by external factors during travel of a vehicle can be avoided even in a vehicle assumed to travel on a rough road such as, for example, an off-road vehicle.

In addition, according to the first aspect of the present invention, at least the portion of the link means, disposed in the back plate, that transmits the power from the electric actuator to the parking brake operator of the parking brake mechanism extends in the tangent direction of the pivot direction of the parking brake operator and at least the portion of the link means disposed outside the back plate is routed while being bent, so the back plate and the link means can follow the concept of a conventional non-electric parking brake device and the electric parking brake with a simple and easy structure can be configured.

According to the second aspect of the present invention, connection is made via the link means routed at a position below the rotating center of the wheel in the back plate, so the link means can easily make connection between the parking brake operator and the electric actuator.

According to the third aspect of the present invention, the actuator case is present at a position inside the outermost circumference of the back plate in side view, so the possibility that the actuator case is attacked by external factors during travel of the vehicle can be reduced.

According to the fourth aspect of the present invention, the operating axis line of the output member of the electric actuator is aligned with the vehicle front-rear direction, so the brake cable can be easily routed.

According to the fifth aspect of the present invention, the actuator case is mounted on the back plate, so the actuator case can be mounted easily.

In addition, according to the sixth aspect of the present invention, at least the portion of the brake cable outside the back plate is covered with the cylindrical member, so the flexibility in the routing of the brake cable is increased.

### Brief Description of Drawings

[Fig. 1] Fig. 1 is a front view illustrating a drum brake (first embodiment).
[Fig. 2] Fig. 2 is a diagram viewed along arrow 2 in Fig. 1 (first embodiment).
[Fig. 3] Fig. 3 is a diagram viewed along arrow 3 in Fig. 2 (first embodiment).

### Reference Signs List

13: back plate
13a: outermost circumference of back plate
33: parking brake mechanism
34: parking brake lever
37: brake cable that is link means
38: electric actuator
39: screw shaft that is output member
40: actuator case
44: outer cable that is cylindrical member
B: drum brake
C1: rotating center
C2: operating axis line

### Description of Embodiments

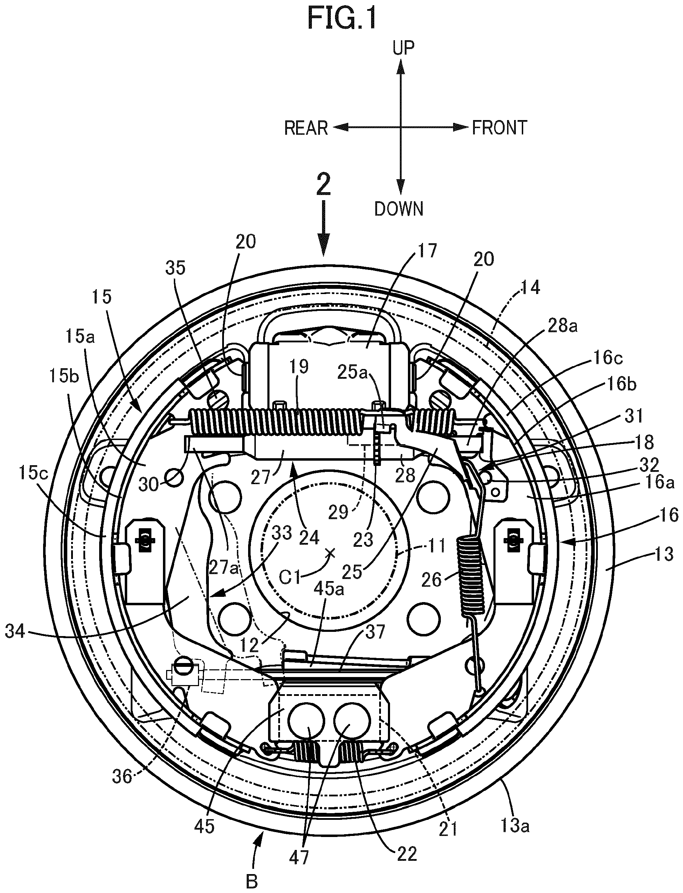

An embodiment of the present invention will be described with reference to the attached drawings Figs. 1 to 3.

### First embodiment

First, in Fig. 1, a drum brake B is provided in a wheel (for example, the left rear wheel) of a four-wheeled vehicle. This drum brake B includes a fixed back plate 13 having a through-hole 12, at the central portion thereof, through which an axle shaft 11 of the left rear wheel penetrates, first and second brake shoes 15 and 16 disposed in the back plate 13 so as to make slidable contact with the inner circumference of a brake drum 14 that rotates together with the left rear wheel, a wheel cylinder 17 fixed to the back plate 13 so as to exert a force for expanding the first and second brake shoes 15 and 16, automatic braking gap adjustment means (so-called automatic adjuster) 18 that automatically adjusts the gap between the first and second brake shoes 15 and 16 and the brake drum 14, and return springs 19 disposed between the first and second brake shoes 15 and 16.

The first and second brake shoes 15 and 16 include first and second webs 15a and 16a formed in bow-shaped flat plates along the inner circumference of the brake drum 14, first and second rims 15b and 16b consecutively provided orthogonally to the outer circumferences of the first and second webs 15a and 16a, and first and second linings 15c and 16c pasted to the outer circumferences of the first and second rims 15b and 16b.

An anchor plate 21, which serves as the fulcrums for expansion and contraction of the first and second brake shoes 15 and 16, is fixed to the back plate 13 so as to pivotably support one end portions (lower end portions in this embodiment) of the first and second webs 15a and 16a. In addition, the wheel cylinder 17 is operated by the output hydraulic pressure of a master cylinder (not illustrated) operated by a brake pedal and fixed to the back plate 13 at a position between the other end portions of the first and second brake shoes 15 and 16 so as to exert a force for expanding the first and second brake shoes 15 and 16 using the anchor plate 21 as the fulcrums, and the outer end portions of a pair of pistons 20 of this wheel cylinder 17 are disposed so as to face the other end portions (upper end portions in this embodiment) of the first and second webs 15a and 16a.

A coil spring 22 for biasing the one end portions of the first and second webs 15a and 16a toward the anchor plate 21 is provided between the one end portions of the first and second webs 15a and 16a, and the pair of return springs 19 for biasing the first and second brake shoes 15 and 16 in the contraction direction are provided between the other end portions of the first and second webs 15a and 16a.

The automatic braking gap adjustment means 18 is provided between the first and second webs 15a and 16a of the first and second brake shoes 15 and 16 and includes a contraction position regulation strut 24 capable of extending by the pivot of an adjustment gear 23, an adjustment lever 25, which has a feed claw 25a engaging with the adjustment gear 23 and is pivotably supported by the second web 16a of the second brake shoe 16 of the first and second brake shoes 15 and 16, and an adjustment spring 26, which biases the adjustment lever 25 to pivot so that the adjustment gear 23 pivots in a direction in which the contraction position regulation strut 24 is extended.

The contraction position regulation strut 24 regulates the contraction positions of the first and second brake shoes 15 and 16 and includes a first rod 27 having a first engaging connection portion 27a that engages with the portion of the first web 15a of the brake shoe 15 of the first and second brake shoes 15 and 16 close to the other end portion, a second rod 28 that has a second engaging connection portion 28a engaging with the portion of the second web 16a of the second brake shoe 16 close to the other end portion and is disposed coaxially with the first rod 27, and an adjustment bolt 29 that has one end portion to be inserted into the first rod 27 relatively movably in the axial direction and the other end portion to be screwed coaxially with the second rod 28, in which the adjustment gear 23 is disposed between the first and second rods 27 and 28 and formed on the outer circumference of the adjusting bolt 29.

A first locking recess 30 with which the first engaging connection portion 27a engages is provided in the side edge that faces the axle shaft 11 close to the other end portion of the first web 15a and a second locking recess 31 with which the second engaging connection portion 28a engages is provided in the side edge that faces the axle shaft 11 close to the other end portion of the second web 16a.

The adjustment lever 25 having the feed claw 25a that engages with the adjustment gear 23 is pivotably supported by the second web 16a via a support shaft 32, and the adjustment spring 26 is provided between the second web 16a and the adjustment lever 25. Moreover, the spring force of the adjustment spring 26 is set smaller than the spring force of the return spring 19.

In the automatic braking gap adjustment means 18 described above, if the first and second brake shoes 15 and 16 are extended by a certain value or more because of the wear of the first and second linings 15c and 16c when the first and second brake shoes 15 and 16 are extended by the operation of the wheel cylinder 17, the adjustment lever 25 pivots about the axis line of the support shaft 32 due to the spring force of the adjustment spring 26 and the adjustment gear 23 pivots, whereby the effective length of the contraction position regulation strut 24 is increased.

By the way, a parking brake mechanism 33 capable of generating a parking brake force is provided in the back plate 13 of this drum brake B, and the parking brake mechanism 33 includes the first and second brake shoes 15 and 16, which can make slidable contact with the inner circumference of the brake drum 14 and a parking brake lever 34 as the parking brake operator to be pivotably connected to the first brake shoe 15.

The parking brake lever 34 is disposed so as to overlap with a part of the first web 15a of the first brake shoe 15 in front view seen in a direction (direction illustrated in Fig. 1) along the rotation axis line of the brake drum 14 and the parking brake lever 34 extends long in the longitudinal direction of first web 15a.

An engaging piece 36 fixed to one end portion of a brake cable 37, which is the link means, engages with one end portion (lower end portion in this embodiment) of the parking brake lever 34, and the other end portion (upper end portion in this embodiment) of the parking brake lever 34 is connected to the other end portion of the first web 15a of the first brake shoe 15 via a pin 35.

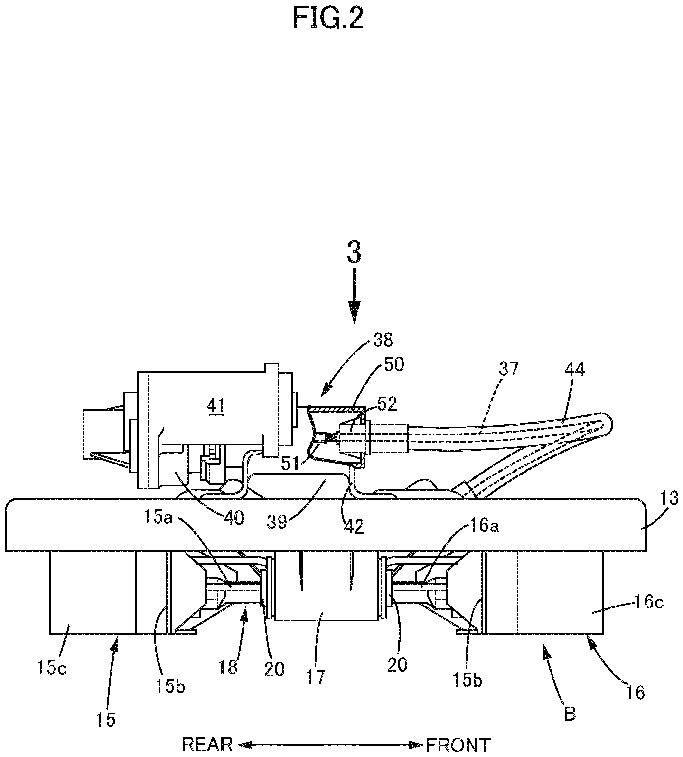

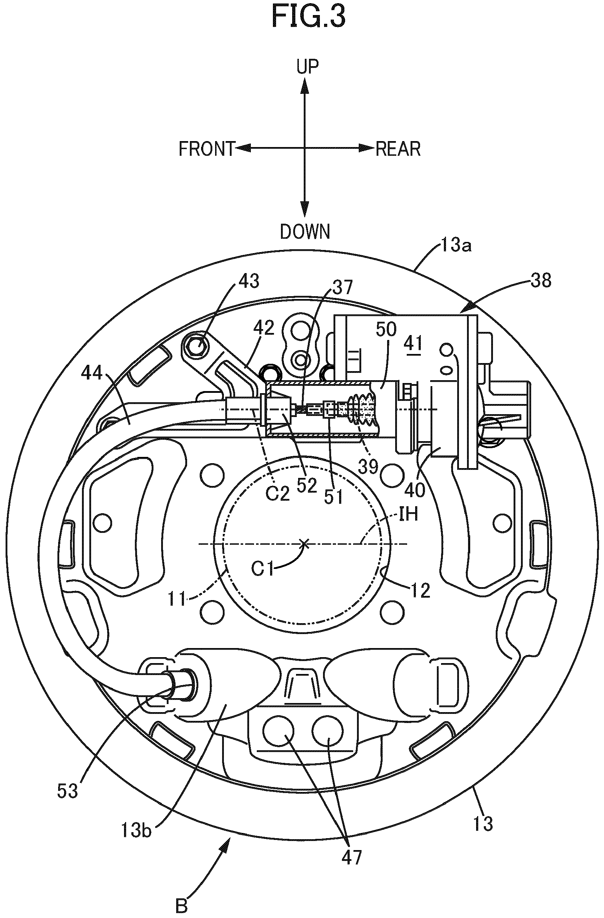

When the parking brake of the vehicle operates, the parking brake lever 34 is pivoted and driven in the counterclockwise direction illustrated in Fig. 1 using the pin 35 as a fulcrum by receiving the power input from an electric actuator 38 (see Figs. 2 and 3) via the brake cable 37, and the pivot of the parking brake lever 34 applies, to the second brake sue 16, a force in a direction in which the second lining 16c of the second brake shoe 16 is pressed against the inner circumference of the brake drum 14 via the contraction position regulation strut 24. Furthermore, when the parking brake lever 34 is continuously pivoted and driven in the counterclockwise direction illustrated in Fig. 1, the parking brake lever 34 is pivoted using the engaging portion with respect to the first engaging connection portion 27a of the contraction position regulation strut 24 as a fulcrum, the first brake shoe 15 is extended via the pin 35, and the first lining 15c of the first brake shoe 15 is pressed against the inner circumference of the brake drum 14. That is, the parking brake lever 34 operates at an operating position at which the first and second linings 15c and 16c of the first and second brake shoes 15 and 16 are pressed against the inner circumference of the brake drum 14 and the parking brake state is obtained in this state.

In addition, when the application of the pivot driving force to the parking brake lever 34 is stopped by loosening the brake cable 37, the parking brake lever 34 returns to the non-operating position together with the first and second brake shoes 15 and 16 operated in a direction away from the inner circumference of the brake drum 14 by the spring force of the return spring 19.

With reference to Fig. 2 and 3 in addition, the brake cable 37 can receive the power from the electric actuator 38 fixedly disposed outside the back plate 13 and is towed by the power generated by the electric actuator 38.

The electric actuator 38 includes a screw shaft 39 as an output member to be connected to the brake cable 37, an actuator case 40 that supports the screw shaft 39 so as to enable reciprocating motion in the axis line direction while blocking the rotation thereof, an electric motor 41 supported by the actuator case 40 so as to be rotatable forward and backward, and a motion conversion mechanism (not illustrated) that is disposed between the electric motor 41 and the shaft 39 and housed in the actuator case 40 while enabling conversion of the rotational motion generated by the electric motor 41 into the linear motion of the screw shaft 39.

The actuator case 40 of the electric actuator 38 is disposed above a rotating center C1 of the wheel, that is, the center of the axle shaft 11 with the drum brake B mounted to the wheel. In the embodiment, the actuator case 40 disposed above a virtual horizontal plane IH passing through the rotating center C1 is mounted on the back plate 13 via an installation member 42 on the opposite side of the wheel cylinder 17. The installation member 42 is fixed to the actuator case 40 and the installation member 42 is fastened to the back plate 13 via a plurality of, for example, three bolts 43.

Moreover, the actuator case 40 is disposed at a position inside an outermost circumference 13a of the back plate 13 as clearly illustrated in Fig. 3 in side view seen in a direction parallel to the rotating center C1 of the wheel.

In addition, the electric actuator 38 is mounted on the back plate 13 so that an operating axis line C2 of the screw shaft 39, which is an output member, that is, the axis line of the screw shaft 38 is aligned with the vehicle front-rear direction.

In addition, at least the portion of the brake cable 37 that is routed outside the back plate 13 is covered with a cylindrical member and, in this embodiment, at least the portion of the brake cable 37 that is routed outside the back plate 13 is covered with an outer cable 44, which is a cylindrical member formed by, for example, winding an iron wire member into a coil. In addition, the cylindrical member only needs to be a member that can receive a reaction force due to the output of the electric actuator 38 and may be a metal cylinder member instead of the outer cable 44 described above.

The screw shaft 39 of the electric actuator 38 is connected to the brake cable 37 via a cable joint 51 and the end portion of the outer cable 44 close to the electric actuator 38 is attached, via a guide tube 52, to a protect cylinder 50 to be mounted on the actuator case 40 so as to cover the connection portion between the screw shaft 39 and the brake cable 37.

A cylindrical portion 13b projects integrally in the front portion along the vehicle front-rear direction in the lower portion of the back plate 13, and the brake cable 37 covered with the outer cable 44 is introduced into the back plate 13 through an introduction hole 53 provided in the cylindrical portion 13b and routed at a position below the axle shaft 11 so as to be present at a position below the rotating center C1 of the wheel in the back plate 13 with the drum brake B mounted to the wheel.

Moreover, at least the portion of the brake cable 37 disposed in the back plate 13 extends in the tangent direction of the pivot direction of the parking brake lever 34, which is pivotably connected to the first web 15a of the first brake shoe 15 via the pin 35, and connected to the parking brake lever 34, and at least the portion of the brake cable 37 disposed outside the back plate 13 is bent and routed and connected to the electric actuator 38 mounted on the back plate 13 above the virtual horizontal plane IH passing through the rotating center C1 of the wheel.

In addition, between one end portions of the first and second webs 15a and 16a, a holding plate 45 that sandwiches the anchor plate 21 between the holding plate 45 and the back plate 13 is attached to the lower portion of the back plate 13 by a pair of rivets 47 together with the anchor plate 21, and a guide portion 45a for guiding the brake cable 37 together with the outer cable 44 is provided integrally on the holding plate 45 so as to have a substantially U-shaped cross section.

Next, the operation of this embodiment will be described. Since the actuator case 40 of the electric actuator 38 is disposed above the rotating center C1 of the wheel with the drum brake B mounted to the wheel, attacks on the electric actuator 38 by external factors during travel can be avoided even in a vehicle that is assumed to travel on a rough road such as, for example, an off-road vehicle.

In addition, the parking brake mechanism 33 provided in the back plate 13 of the drum brake B so as to enable the generation of a parking brake force includes the parking brake lever 34, which is a parking brake operator pivoting by receiving the power from the electric actuator 38, at least the portion of the break cable 37 disposed in the back plate 13, which is the link means provided between the electric actuator 38 and the parking brake lever 34 to transmit the power from the electric actuator 38, extends in the tangent direction of the pivot direction of the parking brake lever 34 and is connected to the parking brake lever 34, and at least the portion of the break cable 37 disposed outside the back plate 13 is bent and connected to the electric actuator 38. Accordingly, the back plate 13 and the brake cable 37 can follow the conventional concept of a non-electric parking brake device, so the electric parking brake device with a simple and easy structure can be configured.

In addition, since the brake cable 37 is routed at a position below the rotating center C1 of the wheel in the back plate 13 with the drum brake B mounted to the wheel, connection between the parking brake lever 34 and the electric actuator 38 can be easily made while the brake cable 37 is easily routed.

In addition, since the actuator case 40 is disposed at a position inside the outermost circumference 13a of the back plate 13 in side view seen in a direction parallel to the rotating center C1 of the wheel, the possibility that the actuator case 40 is attacked by external factors during travel of the vehicle can be reduced.

In addition, since the posture of the electric actuator 38 is set so that the operating axis line C2 of the screw shaft 39 of the electric actuator 38 is aligned with the vehicle front-rear direction, the brake cable 37 can be easily routed.

In addition, since the actuator case 40 is mounted on the back plate 13, the actuator case 40 can be easily mounted.

Furthermore, since at least the portion of the brake cable 37 that is routed outside the back plate 13 is covered with the outer cable 44, which is a cylindrical member, the flexibility in the routing of the brake cable 37 is increased.

Although an embodiment of the present invention has been described above, the present invention is not limited to the embodiment described above and various design changes can be made without departing from the concept thereof.

For example, the actuator case 40 of the electric actuator 38 is mounted on the back plate 13 in the embodiment described above, but the actuator case 40 may be mounted to the undercarriage component of the vehicle.

In addition, the present invention is also applicable to an electric parking brake device in which the back plate does not have the through-hole through which the axle shaft penetrates and the back plate is mounted to the wheel hub.

## Claims

1. An electric parking brake device in which a parking brake mechanism (33) capable of generating a parking brake force is provided in a back plate (13) of a drum brake (B) mounted to a wheel and an electric actuator (38) that exerts power for driving the parking brake mechanism (33) is fixedly disposed outside the back plate (13),
wherein an actuator case (40) of the electric actuator (38) supports an electric motor (41) and a screw shaft (39);
wherein the parking brake mechanism (33) includes a parking brake operator (34) that pivots by receiving the power from the electric actuator (38), at least a portion of link means (37) disposed between the electric actuator (38) and the parking brake operator (34) to transmit the power from the electric actuator (38), the portion being disposed in the back plate (13), extends in a tangent direction of a pivot direction of the parking brake operator (34) and connected to the parking brake operator (34) and at least a portion of the link means (37) disposed outside the back plate (13) is bent and connected to the electric actuator (38);
**characterized in that** the actuator case (40) of the electric actuator (38) is disposed above a virtual horizontal plane passing through a rotating center (C1) of the wheel with the drum brake (B) mounted to the wheel.

2. The electric parking brake device according to claim 1,
wherein the link means (37) is routed at a position below the rotating center (C1) of the wheel in the back plate (13) with the drum brake (B) mounted to the wheel.

3. The electric parking brake device according to any one of claims 1 or 2,
wherein the actuator case (40) is disposed at a position inside an outermost circumference (13a) of the back plate (13) in side view as seen in a direction parallel to the rotating center (C1) of the wheel.

4. The electric parking brake device according to any one of claims 1 to 3,
wherein a posture of the electric actuator (38) is set so that an operating axis line (C2) of an output member (39) of the electric actuator (38) is aligned with a vehicle front-rear direction.

5. The electric parking brake device according to any one of claims 1 to 4,
wherein the actuator case (40) is mounted on the back plate (13).

6. The electric parking brake device according to any one of claims 1 to 5,
wherein the link means disposed between the electric actuator (38) and the parking brake operator (34) is a brake cable (37) and at least a portion of the brake cable (37) is covered with a cylindrical member (44), the portion being routed outside the back plate (13).

## Patentansprüche

1. Elektrische Feststellbremsvorrichtung, bei der ein Feststellbremsmechanismus (33), der eine Feststellbremskraft erzeugen kann, in einer Rückplatte (13) einer an einem Rad montierten Trommelbremse (B) bereitgestellt ist und ein elektrischer Stellantrieb (38), der Spannung zum Ansteuern des Feststellbremsmechanismus (33) ausgibt, fest außerhalb der Rückplatte (13) angeordnet ist,
wobei ein Stellantriebgehäuse (40) des elektrischen Stellantriebs (38) einen Elektromotor (41) und eine Schraubenwelle (39) trägt;
wobei der Feststellbremsmechanismus (33) einen Feststellbremsbetätiger (34) beinhaltet, der schwenkt, indem er die Spannung von dem elektrischen Stellantrieb (38) empfängt, wobei mindestens ein Abschnitt eines Verbindungsmittels (37) zwischen dem elektrischen Stellantrieb (38) und dem Feststellbremsbetätiger (34) zum Übertragen der Spannung von dem elektrischen Stellantrieb (38) angeordnet ist, wobei der Abschnitt in der Rückplatte (13) angeordnet ist, sich in einer Tangentenrichtung einer Schwenkrichtung des Feststellbremsbetätigers (34) erstreckt und mit dem Feststellbremsbetätiger (34) verbunden ist und mindestens ein Abschnitt des außerhalb der Rückplatte (13) angeordneten Verbindungsmittels (37) gebogen und mit dem elektrischen Stellantrieb (38) verbunden ist;
**dadurch gekennzeichnet, dass** das Stellantriebgehäuse (40) des elektrischen Stellantriebs (38) über einer virtuellen horizontalen Ebene angeordnet ist, die durch ein Drehzentrum (C1) des Rades verläuft, wobei die Trommelbremse (B) an dem Rad montiert ist.

2. Elektrische Feststellbremsvorrichtung nach Anspruch 1,
wobei das Verbindungsmittel (37) an einer Position unterhalb des Drehzentrums (C1) des Rades in der Rückplatte (13) verlegt ist, wobei die Trommelbremse (B) an dem Rad montiert ist.

3. Elektrische Feststellbremsvorrichtung nach einem der Ansprüche 1 oder 2,
wobei das Stellantriebgehäuse (40) an einer Position innerhalb eines äußersten Umfangs (13a) der Rückplatte (13) in Seitenansicht, betrachtet in einer Richtung parallel zum Drehzentrum (C1) des Rades, angeordnet ist.

4. Elektrische Feststellbremsvorrichtung nach einem der Ansprüche 1 bis 3,
wobei eine Stellung des elektrischen Stellantriebs (38) so eingestellt ist, dass eine Betriebsachsenlinie (C2) eines Ausgangselements (39) des elektrischen Stellantriebs (38) mit einer Vornwärts-Rückwärtsrichtung des Fahrzeugs ausgerichtet ist.

5. Elektrische Feststellbremsvorrichtung nach einem der Ansprüche 1 bis 4,
wobei das Stellantriebgehäuse (40) auf der Rückplatte (13) montiert ist.

6. Elektrische Feststellbremsvorrichtung nach einem der Ansprüche 1 bis 5,
wobei das zwischen dem elektrischen Stellantrieb (38) und dem Feststellbremsbetätiger (34) angeordnete Verbindungsmittel ein Bremskabel (37) ist und mindestens ein Abschnitt des Bremskabels (37) mit einem zylindrischen Element (44) abgedeckt ist, wobei der Abschnitt außerhalb der Rückplatte (13) geführt wird.

## Revendications

1. Dispositif de frein de stationnement électrique dans lequel un mécanisme de frein de stationnement (33) qui peut générer une force de frein de stationnement est fourni dans une plaque arrière (13) d'un frein à tambour (B) monté sur une roue et un actionneur électrique (38) qui exerce une puissance pour entraîner le mécanisme de frein de stationnement (33), est disposé à demeure à l'extérieur de la plaque arrière (13),
dans lequel un boîtier d'actionneur (40) de l'actionneur électrique (38) supporte un moteur électrique (41) et un arbre à vis (39) ;
dans lequel le mécanisme de frein de stationnement (33) inclut un opérateur de frein de stationnement (34) qui pivote en recevant la puissance en provenance de l'actionneur électrique (38), au moins une partie du moyen de liaison (37) disposée entre l'actionneur électrique (38) et l'opérateur de frein de stationnement (34) pour transmettre la puissance provenant de l'actionneur électrique (38), la partie étant disposée dans la plaque arrière (13), s'étend dans une direction tangente à une direction de pivotement de l'opérateur de frein de stationnement (34) et est reliée à l'opérateur de frein de stationnement (34) et au moins une partie du moyen de liaison (37) disposée à l'extérieur de la plaque arrière (13) est pliée et reliée à l'actionneur électrique (38) ;
**caractérisé en ce que** le boîtier d'actionneur (40) de l'actionneur électrique (38) est disposé au-dessus d'un plan horizontal virtuel passant par un centre de rotation (C1) de la roue avec le frein à tambour (B) monté sur la roue.

2. Dispositif de frein de stationnement électrique selon la revendication 1,
dans lequel le moyen de liaison (37) est acheminé en une position au-dessous du centre de rotation (C1) de la roue dans la plaque arrière (13) avec le frein à tambour (B) monté sur la roue.

3. Dispositif de frein de stationnement électrique selon l'une quelconque des revendications 1 ou 2,
dans lequel le boîtier d'actionneur (40) est disposé en une position à l'intérieur de la circonférence la plus externe (13a) de la plaque arrière (13) en vue latérale telle que vue dans une direction parallèle au centre de rotation (C1) de la roue.

4. Dispositif de frein de stationnement électrique selon l'une quelconque des revendications 1 à 3,
dans lequel une position de l'actionneur électrique (38) est définie de telle sorte qu'une ligne d'axe de fonctionnement (C2) d'un élément de sortie (39) de l'actionneur électrique (38) soit alignée sur une direction avant-arrière de véhicule.

5. Dispositif de frein de stationnement électrique selon l'une quelconque des revendications 1 à 4,
dans lequel le boîtier d'actionneur (40) est monté sur la plaque arrière (13).

6. Dispositif de frein de stationnement électrique selon l'une quelconque des revendications 1 à 5,
dans lequel le moyen de liaison disposé entre l'actionneur électrique (38) et l'opérateur de frein de stationnement (34) est un câble de frein (37) et au moins une partie du câble de frein (37) est recouverte d'un élément cylindrique (44), la partie étant acheminée à l'extérieur de la plaque arrière (13).
